# EUROPEAN PATENT SPECIFICATION

(11) **EP 2 214 328 B1**
(45) Date of publication and mention of the grant of the patent: **21.08.2013**
(21) Application number: 10000742.6
(22) Date of filing: 26.01.2010
(51) Int. Cl.: H04B 7/185

(54) **System providing broadband communication between terrestrial stations and airplanes**
Anordnung zur Breitbandkommunikation zwischen irdischen Stationen und Flugzeugen
Système assurant des communications large bande entre des stations terrestres et des avions.

(30) Priority: 02.02.2009 IL 19685609
(43) Date of publication of application: 04.08.2010
(73) Proprietor: Deutsche Telekom AG, 53113 Bonn (DE)
(72) Inventor: Arnon, Shlomi, Lehavim 85338 (IL); Kadel, Gerhard, 64293 Darmstadt (DE); Einsiedler, Hans Joachim, 13189 Berlin (DE)
(74) Representative: Flaccus, Rolf-Dieter

(56) References cited:
- US-A- 6 167 239
- US-A1- 2008 240 029
- US-A1- 2008 274 734
- US-A1- 2009 010 200

## Description

### Field of the Invention

The present invention relates in general to broadband communication. More particularly, the present invention relates to a system which provides broadband communication between terrestrial stations and airplanes.

### Background of the Invention

Advances in wireless communication have revolutionised the manner of interaction between people, and have shrunk the distances separating people that previously seemed insurpassable. Not only can real-time communication be effected between two very distant points (even thousands of kilometers apart), but also between points that move and change their locations.

Wireless communication has pervaded our lives, from internet connectivity for home leisure activities, to office, commercial, business, security, and government domains. Wireless communication has provided the flexibility of mobile connectivity to global telecommunication infrastructures, and this ability enhances our repertoire of behaviors: nowadays people can do just about anything, anywhere, anytime.

An important new need has emerged over the last decade with respect to on-flight services. In a society where anytime-anywhere wireless connection is a basic expectation, the facility of "always online" for Internet and mobile phones has become an essential necessity for both business and private passengers.

There are several ways for providing on-flight wireless communication. A first and well-proven solution is based on satellite links using an antenna placed on the upper deck of an aircraft. This solution was developed for commercial use and offers satellite-based high-speed Internet access to aircraft passengers and crew. Though effective in achieving global coverage, the use of satellite connectivity is very expensive, and the antenna-induced drag on the aircraft which causes an increase in fuel expense adds to said costs. It should be noted that said use of satellites does not eliminate entirely the need for ground stations (hereinafter will be referred to briefly as GS), as the communication from the aircraft is directed first to the satellite, which in turn communicates with a ground station, which in turn serves as the end point transceiver for the broadband services. For the sake of brevity, this system will be referred to herein as a "satellite based system".

A second type of system for providing a broadband service to airplane passengers is based on ground disposed stations that communicate directly (i.e., without use of satellites) with the airplane in a similar manner as ground stations provide wireless mobile services to ground users. This type of system will be referred to herein as "ground stations based system". However, the prior art ground stations based systems for providing broadband services to airplanes have not yet been matured to a practical system.

As is well known, ground stations based systems for ground users have been widely used, and are well established. There are several factors that differentiate between broadband systems for ground users and ground based broadband systems for airplanes, which require special considerations, as follows:
1. The attenuation model of the signal in typical ground systems for ground users (hereinafter: G-GU) is *R⁴,* or *R⁵.* On the other hand, the attenuation model of the signal in ground-to-airplane (hereinafter: GAP) systems is *R²*. Therefore, the expected disturbances between proximate sources are significantly higher in the case of G-AP in comparison to the typical case of G-GU.
2. The number of relevant airplanes in the air at any given time is significantly lower than the number of ground users using a G-GU system that may require broadband services simultaneously at a given time.
3. Moreover, with respect to the relatively few airplanes in the air at any given time, there exists real time knowledge regarding their locations, for example, knowledge which is obtained by airport facilities. There is no suggestion by the prior art to utilize said airplanes location knowledge for the purpose of improving the G-AP broadband communication.

Furthermore, while applying a new G-AP broadband system, there is a need for the new system to be as simple as possible, and for said new system to easily adapt itself to existing equipment and standards. An important advantage of the present invention is the fact that it can use existing equipments and standards, with very few adaptations and modification requirements.

See US-A-2008/0274734 (Kostanic et al.).

It is therefore an object of the present invention to provide a G-AP system which provides broadband services to airplanes.

It is another object of the present invention to provide a G-AP system which is relatively simple, efficient, and of low cost.

It is still another object of the present invention to provide a G-AP system which can use most of the equipments of a typical G-GU system, requiring very few modifications and adaptations.

Other objects and advantages of the present invention will become apparent as the description proceeds.

### Summary of the Invention

The present invention relates to a system for providing broadband communication to aircrafts, which comprises plurality of ground stations, each ground station operating in a communication protocol suitable for use in broadband ground communication, the system is characterized by comprising: (A) A ground directional antenna; (B) An airplane antenna; and (C) a ground skin interface, which comprises: (a) management module for receiving flight data from an external source, continuously directing said ground directional antenna toward an airplane based on said flight data, and further conveying flight data to ground transmitter and receiver modules; (b) a transmitter module receiving flight data from said management module, and compensating, based on said flight data, for Doppler shift in a broadband signal received from a standard ground communication unit, said transmitter transfers the compensated signal to said ground directional antenna; and (c) a receiver module receiving flight data from said management module, and compensating for Doppler shift in a broadband signal received from said ground directional antenna, said receiver transfers the compensated signal to a standard ground communication unit; and (D) an airplane skin interface, which comprises: (a) management module receiving flight data from an external source within the airplane, and conveying the flight data to an airplane transmitter and airplane receiver modules; (b) a transmitter module receiving flight data from said management module, and compensating, based on said flight data, for Doppler shift in a broadband signal received from a standard airplane communication unit, said transmitter transfers the compensated signal to said airplane directional antenna; and (c) a receiver unit receiving flight data from said management module, and compensating for Doppler shift in a broadband signal received from said airplane directional antenna, said receiver transfers the compensated signal to a standard airplane communication unit.

Preferably, the airplane antenna is a directional antenna, and the management module of the airplane skin interface further continuously directs said airplane directional antenna toward a selected ground directional antenna based on said flight data.

Preferably, the flight data comprises at least the location of the airplane, its route, and its velocity vector.

Preferably, the airplane skin interface is further provided with data relating to the locations of ground stations.

Preferably, each of the transmitters and receivers within the ground and airplane skin interfaces further comprises an attenuation correction module for performing attenuation correction to the transmitted or received signal respectively.

Preferably, the flight data is provided to the ground and airplane skin interfaces from at least one of airport control, airplane navigation system, and airplane flight plan.

Preferably, each management module within the skin interface comprises a smart algorithm for performing one or more of the following: (a) determining the level of transmission power and attenuation correction; (b) determining the direction of the respective antenna based on flight data of relevant airplanes in the region, and given the locations of relevant ground stations; (c) calculation for the purpose of determining the necessary Doppler compensation; (d) reduction of interference between several communicating airplanes; and (e) optimization of the capacity of handling, by providing handover support.

Preferably, each of the transmitters and receivers within the ground and airplane skin interfaces also comprise a carrier frequency shifter, for performing a constant shift of the frequency of the carrier, when a transmission and reception frequencies respectively are different from those of the ground or airplane standard communication units respectively.

### Brief Description of the Drawings

In the Drawings:
- Fig. 1 illustrates the structure of the broadband system of the invention in block diagram form;
- Fig. 2 illustrates the structure of the skin interface, in block diagram form, according to an embodiment of the present invention; and
- Fig. 3 illustrates a ground phased array antenna, according to an embodiment of the present invention.

### Detailed Description of Preferred Embodiments

The present invention provides a G-AP system for providing broadband services to airplanes. It has been found by the inventors that in order to provide such a G-AP system, most of the state-of-art and future standardized infrastructure and apparatus of a G-GU can be used, with some relatively simple adaptations. For example, the system of the present invention can use a WiMAX (IEEE 802.16) equipment, or Long Term Evolution (LTE) technology, with some additional adaptations, as described hereinafter.

More specifically, the system of the present invention uses a protocol and hardware which is based on the well known WiMAX or LTE technologies with several adaptations. The present invention provides an add-on unit which interfaces between the aircraft and the ground broadband communication environment while using almost "off-the-shelf' equipment such as conventionally used in LTE or WiMAX ground stations.

It should be noted that the approach of the system of the present invention, which as said can be relatively easily provided as add-on units to existing G-GU broadband system significantly reduces the costs involved in the development of entirely new G-AP system from the beginning. This is particularly important while considering the relatively small number of potential end-users that are involved (i.e., relatively small number of airplanes, relatively small number of potential users in each airplane).

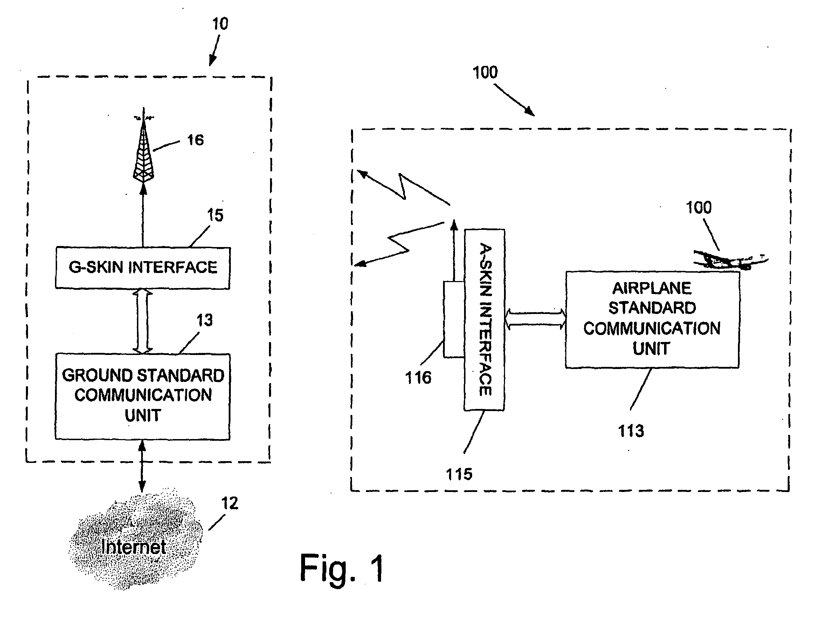

According to the present invention, plurality of ground stations are disposed on the ground in a distance separation of about 25Km - 200Km. Fig. 1 is a general block diagram which illustrates the general structure of the system of the present invention. In similar to the operation of a conventional G-GU system, a broadband link to the Internet 12 is provided from within each GS 10. Furthermore, ground station 10 generally comprises all the conventional, standard equipment as included in a conventional G-GU broadband system, including antenna 16. Hereinafter, the term "standard communication", "standard communication unit", or "standard equipment", refer respectively to a standardized communication, communication unit, or equipment respectively, operating in to a protocol adapted for providing ground broadband service to ground users, such as WiMax or LTE. However, in difference from a conventional G-GU system where the antenna 16 is an omni-directional antenna, according to the present invention, antenna 16 is a directional antenna, most preferably a phased array directional antenna. As in the prior art, GS 10 comprises a standard G-communication unit 13, that uses a Wi-Max, or LTE protocol. However, while in the prior art a standard communication unit (such as Wi-Max or LTE), feeds the antenna directly, according to the present invention an additional, an inventive G-skin interface 15 is provided at the ground station 10, and similarly an inventive A-skin interface 115 is provided within the airborne system 100 between standard airplane communication unit 113 (such as Wi-Max or LTE) and the airplane antenna 116.

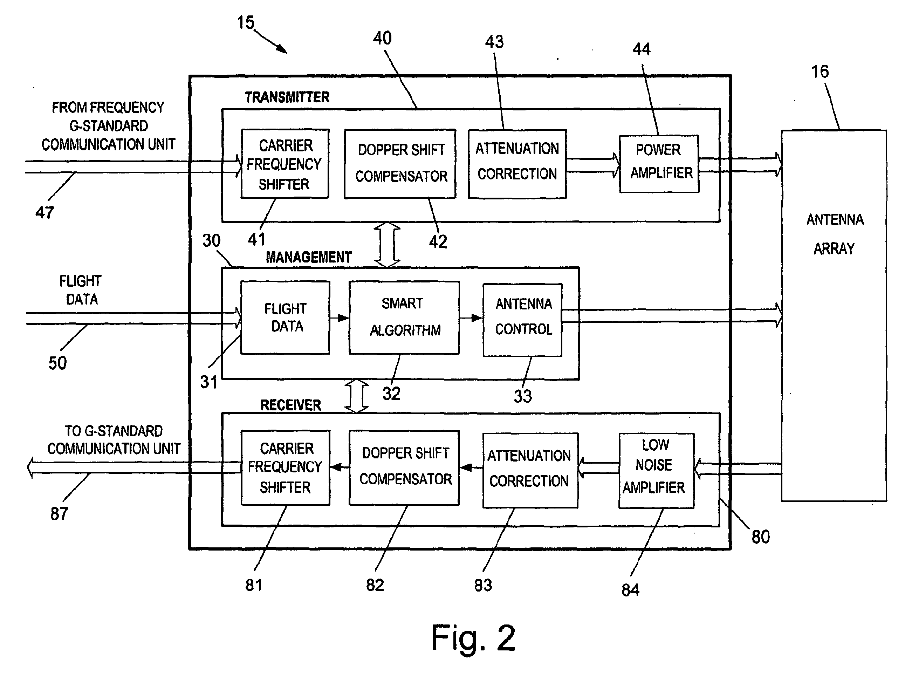

As shown in Fig. 1, the G-AP broadband system of the present invention comprises two skin interfaces, a G-skin interface 15, and an A-skin interface 115. The general structures of the skin interface 15 and of the A-skin interface 115 are similar, besides some adaptation differences that will be discussed herein specifically. Fig. 2 illustrates the general structure of G-skin interface 15. The G-skin interface 15 comprises three modules, as follows: transmitter module 40, management module 30, and receiver module 80. The G-skin module receives a signal 47 from the ground standard communication unit 13, which as said operates in WiMax or LTE standards.

Management module 30 controls and coordinates between the various modules of G-skin 15, such as transmitter 40, receiver 80 and the antenna array 16. Management module 30 generally comprises three units, flight data unit 31, smart algorithm unit 32, and antenna control unit 33. The flight data 50 is preferably received in real time from an external source, such as from an airport control. It comprises at least the real time location of one or more airplanes, and their corresponding height, and preferably some additional data, such as the airplane velocity vector and its expected route, etc. The flight data is essential for the present invention, as it enables obtaining significant advantages, as follows:
a. According to the present invention, antenna array 16 is a directional antenna, which directs its beam to the airplane, and maintains the direction to the airplane as long as the airplane is within its effective range. In a more preferred embodiment, antenna 16 is of a phased array type that sequentially, or simultaneously performs communication with several airplanes in the air. In the case of a sequential use, the phased array antenna has one beam, which is directed sequentially one at a time to the relevant airplanes. In the case of simultaneous use, the phased array antenna has plurality of beams, and the antenna directs the beams simultaneously to plurality of relevant airplanes within its range. Therefore, having the real time flight data 31, the smart algorithm unit 32 computes the relevant data necessary for continuously directing the antenna 16 one or more beams to the relevant airplanes, and provides this data to the antenna control 33.
b. The flight data is also used for compensations within the transmitter 40 and the receiver 80. As will be elaborated hereinafter, the flight data is used for compensating for the Doppler shift, which is resulted due to the airplanes movement.
c. The smart algorithm unit 32 further handles interference cases between several airplanes. In view of the fact that several airplanes within the range of antenna 16 may interfere one with the other (whether wile communicating with the present ground station or with others), the smart algorithm unit 42 also optimizes the handling of interference cases. Upon detection of interference, the smart algorithm determines the interfering airplane. Following this determination, the smart algorithms is provided with: (a) the direction to the interfering airplane (based on the inputted flight data); (b) the direction to the communicating airplane (based on the flight data); and (c) the directional characteristics of the ground directional antenna 16, i.e., its main lobe and side lobes characteristics. Therefore, according to the present invention the smart algorithm can eliminate, or at least reduce the interference by performing adjustment of the antenna 16 direction, for example, by positioning the antenna direction in such a manner that it positions the interfering airplane within a null location with respect to the antenna receiving characteristics. In another alternative, the interference calculation by the smart algorithm may result, in the transfer of the handling of the communication from the present ground station to another one (even if it is within the range of the present ground station). and
d. Determination of the necessary transmission power, and attenuation correction, in order to eliminate saturation of amplifiers and signal distortion.

In general, the smart algorithm unit 32 therefore calculates and controls at least the following aspects:
b. The transmission power and attenuation correction;
c.The direction of the antenna 16 based on flight data, generally from the ground control, data from the airplane, and the flight plan of relevant airplanes in the region, and given the locations of relevant ground stations.
d. Calculation for the purpose of determining the necessary Doppler compensation;
e. Reduction of interference between several communicating airplanes; and
f. Optimizing the interference level and capacity of handling, by providing handover support.

The fact that the airplane is in movement causes a Doppler distortion to the signal. The management module 30, which as said receives the airplane flight data, conveys to transmitter 40 and receiver 80 relevant data for compensating the signal for the airplane movement. The Doppler shift compensators 42 and 82 of the transmitter and the receiver respectively use the received flight data, particularly the velocity vector of the airplane, for dynamically compensating for the distortions in the respective modulated signals that are caused due to the airplane movement. The carrier frequency shifter 41 of the transmitter, and the carrier frequency shifter 81 of the receiver apply a constant frequency shift to the carrier, in order to adapt the transmitted and received carrier frequencies to the standard WiMAX or LTE carrier frequencies, assuming that the transmitted and received frequencies between the skin unit and the airplane differ from those of the standard communication unit 13 (see Fig. 1). Furthermore, as generally the range to the communicating airplane is larger than in a typical WiMax and LTE systems, the roundtrip maximal delay which is used for determining a valid signal, particularly for the purpose of reduction of interference, is also calibrated in the skin unit accordingly. The attenuation correction units 43 and 83 perform attenuation correction. Also in this case the flight data can be used in the attenuation correction unit 43 of the transmitter for determining the level of the signal, depending on the airplane location. In the receiver, the attenuation correction unit may be used in order to standardize the level of the received signal.

The transmitter 40 also comprises a power amplifier 44, and the receiver 80 also comprises a low noise amplifier 84 which are conventional units. The power amplifier 51 amplifies the RF signal of the transmitter and inputs it to the antenna array 16. In the opposite direction, the received signal from the antenna array 16 is amplified by the low noise amplifier 84, and is then further processed by the other units of the receiver. The receiver finally conveys the processed received signal to the ground standard communication unit 13.

As mentioned, the general structure of skin unit 115 of the airplane is essentially the same as of the ground skin unit 15.

As shown, the skin units 15 and 115 are most advantageous when applied for use with existing protocol standards such as WiMAX and LTE. Therefore the system of the present invention is scalable and flexible and can accommodate also future upgrades when said standards will change, or even to operate with proprietary protocols. The skin units 15 and 115 are essentially physical layer oriented that do not require complex higher-level adaptations. Therefore, the skin units 15 and 115 are essentially add-on units that enable providing of broadband services to airplane passengers operation without the need to design-from-scratch of an end-to-end solution.

As previously noted, the antennas of the GS of the invention are directional. Preferably, in each GS one of the following two types of antennas is used:
a. A phased array antenna, which is based on electrical "beam-steering"; or
b. A sector antenna, which is directed to cover a specific sector and is a non-adjustable antenna.

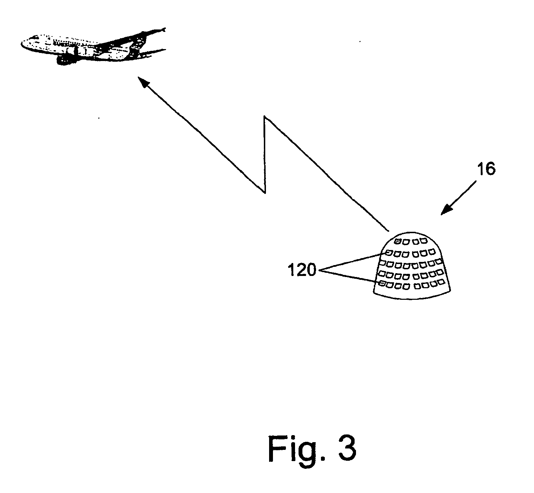

Fig. 3 shows an exemplary phased array antenna 16 which is used in an embodiment of the invention. The antenna has a half-sphere structure, on which plurality of array elements are disposed. Based on the control signals that are received from the antenna control unit 33 of the managing module 30 one or more of the elements 120 are activated to effect directional communication with airplane 100. As previously mentioned, antenna control unit is controlled by the smart algorithm unit 32, which in turn receives flight data from flight data unit 31.

Alternatively, antenna 16 may be a sector type directional antenna. A sector antenna is an antenna which is directed at fixed angles (both elevation and azimuth angles) and a beam steering as in a phased array antenna cannot be performed.

It should be noted that the implementation of a sector antenna is simpler, but it requires use of a very large antenna. On the other hand, a phased array GS antenna is more complex to implement, but is considerably smaller and provides a much better interference resilience.

As said, preferably the airplane antenna 116 is also directional. The airplane directional antenna 116 may be of a phased array type, or of lower complexity. Preferably, antenna 116 is small and of lightweight for minimizing drags. In one embodiment, the airplane antenna 116 is made in a form of an array of blade antennas, wherein the array is positioned at the bottom of the airplane. Such a solution provides a relatively good beam quality, and an enhanced gain, although such an arrangement has a limited beam steering capability in comparison to a phased array antenna. The use of an array of blade antennas in the airplane therefore requires use of a relatively complex GS antenna 16, for example, a phased array type antenna as described with respect to Fig. 3. It should be noted that also the airplane skin interface 115 uses flight data, which exists aboard the airplane (for example, within the airplane navigation system). In addition to the flight data (i.e., from the ground control, from the airplane, and from the flight plan), the airplane skin interface 115 is also provided with the locations of the ground stations, in order to enable continuous direction of the airplane directional antenna 116 toward a selected ground station.

As mentioned, the use of a directional antenna within the airplane is preferable, but in some cases the airplane antenna may also be an omni-directional antenna. In that case, the use of flight data within the airplane skin interface, which in said preferable case was utilized for directing the airplane antenna, is essentially eliminated.

In some cases, in order to improve performance, a communication between the airplane and more than one ground station is desirable (like soft-handoff in IS95-CDMA). Therefore, preferably, during the airplane flight, at any given time the system maintains *n* ≥1 parallel active GSs for each airplane. As noted, the ground and airplane (only in the preferable case in which a directional antenna is used aboard the airplane) skin interfaces are provided with the airplane flight data (including the airplane location, route, and velocity vector), which enables an increased efficiency by: (a) enabling accurate directional communication between the airplane and the ground station; (b) selection by the airplane of the most appropriate ground station from interference and capacity point of view, and (c) Doppler, carrier and attenuation corrections to the signals.

As can be seen, the present invention provides two relatively simple ground and airplane add-on skin interfaces that can upgrade a standard WiMax or LTE broadband system to a broadband system for airplanes. Said skin interfaces which use flight data and directional antennas provide a very efficient manner for providing broadband communication to airplanes, that does not require development and definition of a whole system from scratch.

While some embodiments of the invention have been described by way of illustration, it will be apparent that the invention can be carried out with many modifications, variations and adaptations, and with the use of numerous equivalents or alternative solutions that are within the scope of persons skilled in the art, without exceeding the scope of the claims.

## Claims

1. System for providing broadband communication to aircrafts, which comprises plurality of ground stations, each ground station operating in a communication protocol suitable for use in broadband ground communication, the system is **characterized by** comprising:
- a ground directional antenna;
- an airplane antenna; and
- a ground skin interface, which comprises:
a. management module for receiving flight data from an external source, continuously directing said ground directional antenna toward an airplane based on said flight data, and further conveying flight data to ground transmitter and receiver modules;
b. a transmitter module receiving flight data from said management module, and compensating, based on said flight data, for Doppler shift in a broadband signal received from a standard ground communication unit, said transmitter transfers the compensated signal to said ground directional antenna;
c. a receiver module receiving flight data from said management module, and compensating for Doppler shift in a broadband signal received from said ground directional antenna, said receiver transfers the compensated signal to a standard ground communication unit;
and
- an airplane skin interface, which comprises:
a. management module receiving flight data from an external source within the airplane, and conveying the flight data to an airplane transmitter and airplane receiver modules;
b. a transmitter module receiving flight data from said management module, and compensating, based on said flight data, for Doppler shift in a broadband signal received from a standard airplane communication unit, said transmitter transfers the compensated signal to said airplane antenna; and
c. a receiver unit receiving flight data from said management module, and compensating for Doppler shift in a broadband signal received from said airplane antenna, said receiver transfers the compensated signal to a standard airplane communication unit.

2. System according to claim 1, wherein the airplane antenna is a directional antenna, and wherein the management module of the airplane skin interface further continuously directs said airplane directional antenna toward a selected ground directional antenna based on said flight data.

3. System according to claim 1, wherein the flight data comprises at least the location of the airplane, its route, and its velocity vector.

4. System according to claim 1, wherein the airplane skin interface is further provided with data relating to the locations of ground stations.

5. System according to claim 1, wherein each of the transmitters and receivers within the ground and airplane skin interfaces further comprises an attenuation correction module for performing attenuation correction to the transmitted or received signal respectively.

6. System according to claim 1, wherein the flight data is provided to the ground and airplane skin interfaces from at least one of: airport control, airplane navigation system, and airplane flight plan.

7. System according to claim 1, wherein each management module within the skin interface comprises a smart algorithm for performing one or more of the following:
a. determining the level of transmission power and attenuation correction;
b. determining the direction of the respective antenna based on flight data of relevant airplanes in the region, and given the locations of relevant ground stations;
c. calculation for the purpose of determining the necessary Doppler compensation;
d. reduction of interference between several communicating airplanes; and
e. optimization of the capacity of handling, by providing handover support.

8. System according to claim 1, wherein each of the transmitters and receivers within the ground and airplane skin interfaces also comprise a carrier frequency shifter, for performing a constant shift of the frequency of the carrier, when a transmission and reception frequencies respectively are different from those of the ground or airplane standard communication units respectively.

## Patentansprüche

1. System zur Bereitstellung von Breitbandkommunikation an Flugzeuge, welches eine Vielzahl an Bodenstationen umfasst, von denen jede in einem Kommunikationsprotokoll, das für die Verwendung in einer Breitband-Bodenkommunikation geeignet ist, arbeitet, wobei das System **dadurch gekennzeichnet ist, dass** es umfasst:
- eine Boden-Richtantenne,
- eine Flugzeug-Antenne und
- eine Boden-Skin-Schnittstelle, umfassend:
a. ein Management-Modul für den Empfang von Flugdaten von einer externen Quelle, das kontinuierliche Ausrichten der Boden-Richtantenne auf ein Flugzeug auf der Basis dieser Flugdaten und des Weiteren das Übertragen von Flugdaten an Boden-Sender- und Empfänger-Module,
b. ein Sender-Modul, das Flugdaten von dem Management-Modul empfängt und auf der Basis dieser Flugdaten die Doppler-Verschiebung in einem Breitbandsignal kompensiert, welches das Modul von einer Standard-Boden-Kommunikationseinheit empfangen hat, wobei der Sender das kompensierte Signal an die Boden-Richtantenne überträgt,
c. ein Empfänger-Modul, das Flugdaten von dem Management-Modul empfängt und die Doppler-Verschiebung in einem Breitbandsignal, welches das Modul von der Boden-Richtantenne empfangen hat, kompensiert, wobei der Empfänger das kompensierte Signal an eine Standard-Boden-Kommunikationseinheit überträgt,
und
- eine Flugzeug-Skin-Schnittstelle, umfassend:
a. ein Management-Modul, das Flugdaten von einer externen Quelle innerhalb des Flugzeuges empfängt und diese Flugdaten an Flugzeug-Sender- und Flugzeug-Empfänger-Module überträgt,
b. ein Sender-Modul, das Flugdaten von dem Management-Modul empfängt und auf der Basis dieser Flugdaten die Doppler-Verschiebung in einem Breitbandsignal kompensiert, welches das Sender-Modul von einer Standard-Flugzeug-Kommunikationseinheit empfangen hat, wobei der Sender das kompensierte Signal an die Flugzeugantenne überträgt, und
c. ein Empfänger-Modul, das Flugdaten von dem Management-Modul empfängt und die Doppler-Verschiebung in einem Breitbandsignal, welches das Modul von der Flugzeugantenne empfangen hat, kompensiert, wobei der Empfänger das kompensierte Signal an eine Standard-Flugzeug-Kommunikationseinheit überträgt.

2. System nach Anspruch 1, bei welchem die Flugzeugantenne eine Richtantenne ist und das Management-Modul der Flugzeug-Skin-Schnittstelle des Weiteren die Flugzeug-Richtantenne auf der Basis der Flugdaten kontinuierlich auf eine ausgewählte Boden-Richtantenne ausrichtet.

3. System nach Anspruch 1, bei welchem die Flugdaten wenigstens die Position des Flugzeuges, dessen Route und dessen Geschwindigkeitsvektor umfassen.

4. System nach Anspruch 1, bei welchem die Flugzeug-Skin-Schnittstelle des Weiteren mit Daten bezüglich der Positionen von Bodenstationen versehen ist.

5. System nach Anspruch 1, bei welchem jeder der Sender und Empfänger innerhalb der Boden- und Flugzeug-Skin-Schnittstellen des Weiteren ein Dämpfungsausgleichsmodul zur Durchführung des Dämpfungsausgleichs des gesendeten beziehungsweise empfangenen Signals umfasst.

6. System nach Anspruch 1, bei welchem die Flugdaten den Boden- und Flugzeug-Skin-Schnittstellen von wenigstens Einem aus der Gruppe bestehend aus Flughafenkontrolle, Flugzeugnavigationssystem und Flugzeug-Flugplan bereitgestellt werden.

7. System nach Anspruch 1, bei welchem jedes Management-Modul innerhalb der Skin-Schnittstelle einen intelligenten Algorithmus zur Durchführung einer oder mehrerer der folgenden Handlungen umfasst:
a. Bestimmen der Höhe der Sendeleistung und des Dämpfungsausgleichs,
b. Bestimmen der Richtung der jeweiligen Antenne auf der Basis der Flugdaten relevanter Flugzeuge in dem Gebiet, wobei die Positionen von relevanten Bodenstationen gegeben sind,
c. Berechnung zum Zwecke der Bestimmung der erforderlichen Doppler-Kompensation,
d. Reduzieren der Interferenz zwischen mehreren kommunizierenden Flugzeugen, und
e. Optimieren der Abwicklungskapazität durch Bereitstellen von Handover-Unterstützung.

8. System nach Anspruch 1, bei welchem jeder der Sender und Empfänger innerhalb der Boden- und Flugzeug-Skin-Schnittstellen auch eine Trägerfrequenzverschiebeeinrichtung umfasst, und zwar zur Durchführung einer konstanten Verschiebung der Frequenz des Trägers, wenn sich Sende- beziehungsweise Empfangsfrequenzen von denjenigen der Boden- beziehungsweise Flugzeug-Standard-Kommunikationseinheiten unterscheiden.

## Revendications

1. Système pour assurer une communication en bande large avec des avions, qui comprend une pluralité de stations au sol, chaque station au sol fonctionnant selon un protocole de communication approprié à une utilisation dans une communication au sol en bande large, le système est **caractérisé en ce qu'**il comprend :
- une antenne directionnelle au sol ;
- une antenne d'avion ; et
- une interface d'habillage au sol, qui comprend :
a. un module de gestion pour recevoir des données de vol d'une source externe, diriger de façon continue ladite antenne directionnelle au sol vers un avion sur la base desdites données de vol, et en outre transporter des données de vol jusqu'à des modules d'émetteur et de récepteur au sol ;
b. un module d'émetteur recevant des données de vol dudit module de gestion, et compensant, sur la base desdites données de vol, un décalage Doppler dans un signal en bande large reçu d'une unité de communication au sol standard, ledit émetteur transfère le signal compensé jusqu'à ladite antenne directionnelle au sol ;
c. un module de récepteur recevant des données de vol dudit module de gestion, et compensant un décalage Doppler dans un signal en bande large reçu de ladite antenne directionnelle au sol, ledit récepteur transfère le signal compensé jusqu'à une unité de communication au sol standard ;
et
- une interface d'habillage d'avion, qui comprend :
a. un module de gestion recevant des données de vol d'une source externe à l'intérieur de l'avion, et transportant les données de vol jusqu'à des modules d'émetteur d'avion et de récepteur d'avion ;
b. un module d'émetteur recevant des données de vol dudit module de gestion, et compensant, sur la base desdites données de vol, un décalage Doppler dans un signal en bande large reçu d'une unité de communication d'avion standard, ledit émetteur transfère le signal compensé jusqu'à ladite antenne d'avion ; et
c. un module de récepteur recevant des données de vol dudit module de gestion, et compensant un décalage Doppler dans un signal en bande large reçu de ladite antenne d'avion, ledit récepteur transfère le signal compensé jusqu'à une unité de communication d'avion standard.

2. Système selon la revendication 1, dans lequel l'antenne d'avion est une antenne directionnelle, et dans lequel le module de gestion de l'interface d'habillage d'avion dirige en outre de façon continue ladite antenne directionnelle d'avion vers une antenne directionnelle au sol sélectionnée sur la base desdites données de vol.

3. Système selon la revendication 1, dans lequel les données de vol comprennent au moins la localisation de l'avion, son cap, et son vecteur de vitesse.

4. Système selon la revendication 1, dans lequel l'interface d'habillage d'avion reçoit en outre des données se rapportant aux localisations de stations au sol.

5. Système selon la revendication 1, dans lequel chacun parmi les émetteurs et les récepteurs au sein des interfaces d'habillage au sol et d'avion comprend en outre un module de correction d'atténuation pour exécuter une correction d'atténuation du signal émis ou reçu respectivement.

6. Système selon la revendication 1, dans lequel les données de vol sont fournies aux interfaces d'habillage au sol et d'avion par au moins un parmi : un contrôle d'aéroport, un système de navigation d'avion, et un plan de vol d'avion.

7. Système selon la revendication 1, dans lequel chaque module de gestion au sein de l'interface d'habillage comprend un algorithme intelligent pour exécuter un ou plusieurs parmi les suivants :
a. la détermination du niveau de puissance d'émission et de correction d'atténuation ;
b. la détermination de la direction de l'antenne respective sur la base de données de vol d'avions pertinents dans la région, et compte tenu des localisations de stations au sol pertinentes ;
c. le calcul aux fins de détermination de la compensation Doppler nécessaire ;
d. la réduction d'une interférence entre plusieurs avions en communication ; et
e. l'optimisation de la capacité de gestion, en fournissant un support de transfert cellulaire.

8. Système selon la revendication 1, dans lequel chacun parmi les émetteurs et les récepteurs au sein des interfaces d'habillage au sol et d'avion comprend également un dispositif de glissement de fréquence porteuse, pour exécuter un glissement constant de la fréquence de la porteuse, lorsque des fréquences d'émission et de réception sont respectivement différentes de celles des unités de communication standard au sol ou d'avion respectivement.
